# EUROPEAN PATENT APPLICATION

(11) **EP 4 023 878 A1**
(43) Date of publication of application: **06.07.2022**
(21) Application number: 20857309.7
(22) Date of filing: 17.07.2020
(51) Int. Cl.: F03D 7/04, F03D 1/06

(54) **WIND POWER GENERATOR AND METHOD FOR STOPPING SAME**

(30) Priority: 29.08.2019 JP 2019156625
(71) Applicant: Hitachi, Ltd., Tokyo 100-8280 (JP)
(72) Inventor: NAMURA, Nobuo, Tokyo 100-8280 (JP); OKUNO, Azuma, Tokyo 100-8280 (JP)
(74) Representative: MERH-IP Matias Erny Reichl Hoffmann Patentanwälte PartG mbB
(86) International application number: PCT/JP2020/027889
(87) International publication number: WO 2021/039188

(57) **Abstract**

Even when a low stiffness blade is adopted, collision between the blade and a tower is avoided when a wind power generation apparatus is to be stopped, while an increase in the time required for the stop is suppressed. A rotor 10 including a blade 2, a nacelle 4 that supports the rotor 10, a tower 5 that supports the nacelle 4, a pitch angle control mechanism 21 that controls a pitch angle of the blade 2, and a controller 12 that outputs a target value of the pitch angle to the pitch angle control mechanism 21 are included. When the wind power generation apparatus is to be stopped, the controller 12 determines the target value of the pitch angle in a feather operation of the blade 2 such that the blade 2 does not greatly bend toward the tower 5 in an azimuth angle range in which the blade 2 passes through the tower 5.

## Description

### Technical Field

The present invention relates to a wind power generation apparatus and a method for stopping the same, and more particularly to a downwind-type wind power generation apparatus including a low stiffness blade and a method for stopping the same.

### Background Art

Due to growing interest in renewable energy utilization, global market expansion of wind power generation apparatuses is predicted. As a megawatt-class wind power generation apparatus, a wind power generation apparatus, including a rotor radially attached to a hub that rotates blades, a nacelle that supports the rotor via a main shaft, and a tower that supports, from a lower portion, the nacelle by allowing yaw rotation, is frequently used.

In recent years, wind power generation apparatuses have been significantly increased in size and capacity on the sea in order to reduce power generation costs, and the deflection of blades during power generation has also been increased. In an upwind-type wind power generation apparatus in which the rotor is located on the windward side of the tower, high stiffness of the blades and initial deflection to the windward side are introduced in order to prevent collision between the blade and the tower. On the other hand, in a downwind-type wind power generation apparatus in which the rotor is located on the leeward side of the tower, the blade bends away from the tower during power generation, so that there is no possibility of collision with the tower, and it is expected that lightweight blades can be adopted by reducing stiffness.

However, a negative lift force is generated due to the feather operation of the blade during a stop operation for the wind power generation apparatus, and a fluid force toward the windward side acts on the blade. Therefore, when low stiffness blades are adopted in the downwind-type wind power generation apparatus, there is a possibility that the blade may bend toward the windward side to collide with the tower.

As a technique for reducing a load acting on a blade during a stop operation for a wind power generation apparatus, a horizontal axis windmill described in Patent Literature 1, for example, has been proposed. In Patent Literature 1, when a pitch drive control system becomes inoperable and when an emergency stop is made by feathering the blade with a forced feathering system in which angular velocity control is impossible, a load acting on a windmill (blade or tower) in an angle-changing process during forced feathering of the blade is reduced by using an angular velocity control mechanism that gives a resistance force to a pitch angle changing motion of the blade in a limited pitch angle range.

### Citation List

### Patent Literature

PTL 1: JP 2010-270733 A

### Summary of Invention

### Technical Problem

According to the horizontal axis windmill described in Patent Literature 1, the maximum load acting on the blade can be reduced even when an emergency stop is made by feathering the blade with the forced feathering system. However, the braking force on the rotor that rotates to obtain the effect of reducing the load acting on the blade decreases. Therefore, when a low stiffness blade is adopted, there is a concern that in order to avoid collision between the blade and the tower, the time required for the stop may greatly increase.

The present invention has been made in view of these situations, and an object of the present invention is to provide a wind power generation apparatus capable of avoiding collision between a blade and a tower, and a method for stopping the wind power generation apparatus even when a low stiffness blade is adopted, while an increase in the time required for the stop is suppressed.

### Solution to Problem

In order to solve the above problems, a wind power generation apparatus and a method for stopping the same are configured as described in the claims. An example of the specific configuration of a wind power generation apparatus according to the present invention includes: a rotor including at least one blade; a nacelle that supports the rotor; a tower that supports the nacelle; a pitch angle control mechanism that controls a pitch angle of the blade; and a controller that outputs a target value of the pitch angle to the pitch angle control mechanism, in which when the wind power generation apparatus is to be stopped, the controller determines the target value of the pitch angle during a feather operation of the blade such that the blade does not greatly bend toward the tower in an azimuth angle range in which the blade passes through the tower.

### Advantageous Effects of Invention

According to the present invention, even when a low stiffness blade is adopted, collision between the blade and the tower can be avoided when the wind power generation apparatus is to be stopped, while an increase in the time required for the stop is suppressed.

Problems, configurations, and advantageous effects other than those described above will be clarified by the following description of embodiments.

### Brief Description of Drawings

[FIG. 1] FIG. 1 is a view illustrating a configuration of a wind power generation apparatus of a first example according to an embodiment of the present invention.
[FIG. 2] FIG. 2 is a view for explaining a controller in the first example.
[FIG. 3] FIG. 3 is a view for explaining a relationship between a pitch angle and an azimuth angle during a stop operation.
[FIG. 4] FIG. 4 is a view for explaining a stop method in which a feather operation is stared based on an azimuth angle.
[FIG. 5] FIG. 5 is a view for explaining a relationship between a pitch angle and an azimuth angle in consideration of a decrease in rotation speed due to a stop operation.
[FIG. 6] FIG. 6 is a view for explaining a stop method in which a pitch angle is fixed when a tower is passed through.
[FIG. 7] FIG. 7 is a view for explaining a stop method in which a pitch angle is returned to being fine when a tower is passed through.
[FIG. 8A] FIG. 8A is a view for explaining a stop method in which a pitch rate is changed, and is an explanatory view when the pitch rate is lowered.
[FIG. 8B] FIG. 8B is a view for explaining a stop method in which a pitch rate is changed, and is an explanatory view when the pitch rate is raised.
[FIG. 9] FIG. 9 is a view for explaining a stop method in which a pitch rate is changed to reduce a load imbalance.
[FIG. 10] FIG. 10 is a view for explaining a stop method in which a pitch rate is changed without using independent pitch control.

### Description of Embodiments

Hereinafter, examples of the present invention will be described with reference to the drawings.

### First Example

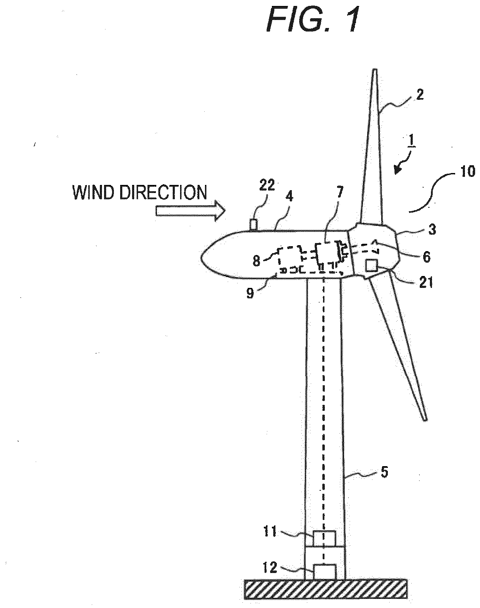

First, an example of the configuration of a wind power generation apparatus to which the present invention is applied will be described with reference to FIG. 1. FIG. 1 is an overall schematic configuration view of the wind power generation apparatus. As illustrated in FIG. 1, a wind power generation apparatus 1 includes a blade 2 that rotates by receiving wind, a hub 3 that supports the blade 2, a nacelle 4 that houses a power transmission unit, a generator, and the like, and a tower 5 that rotatably supports the nacelle 4. The nacelle 4 includes a main shaft 6 that is connected to the hub 3 to rotate together with the hub 3, a speed-increasing gear 7 that is connected to the main shaft 6 to increase a rotation speed, and a generator 8 that rotates a rotor at the rotation speed increased by the speed-increasing gear 7 to perform power generation operation. A portion that transmits the rotational energy of the blade 2 to the generator 8, is referred to as a power transmission unit. In the present embodiment, the main shaft 6 and the speed-increasing gear 7 are included in the power transmission unit. The speed-increasing gear 7 and the generator 8 are held on a main frame 9. The blade 2 and the hub 3 constitute a rotor 10.

In the wind power generation apparatus 1 illustrated in FIG. 1, an example in which three blades 2 and the hub 3 constitute the rotor 10 is illustrated. But the present invention is not limited thereto, and the hub 3 and at least one blade 2 may constitute the rotor 10. In addition, the nacelle 4 is rotatably supported with respect to the tower 5 in FIG. 1, but the nacelle 4 may not rotate with respect to the tower 5 as long as the tower 5 can rotate in a horizontal plane.

FIG. 1 illustrates a state in which the wind power generation apparatus 1 is viewed from the side, and it is assumed that wind is blowing from left to right on the paper against a downwind-type wind power generation apparatus in which the rotor 10 is located on the leeward side of the tower 5.

In addition, a power converter 11 that converts the frequency of power; a switch for a switching unit that conducts and blocks current, a transformer, and the like (not illustrated); a controller 12; and the like are disposed in a bottom portion (lower portion) in the tower 5, as illustrated in FIG. 1. As the controller 12, a control panel or a supervisory control and data acquisition (SCADA), for example, is used.

The wind power generation apparatus 1 includes a pitch angle control mechanism 21 that controls the pitch angle of the blade 2, and a wind vane anemometer 22 installed on the nacelle 4. As the pitch angle control mechanism 21, an electric type, for example, is adopted, by which the pitch angle of each blade 2 can be independently controlled. Note that the wind vane anemometer 22 may be installed in another position of the wind power generation apparatus 1, or may be installed outside the wind power generation apparatus 1 as long as it is near the wind power generation apparatus 1.

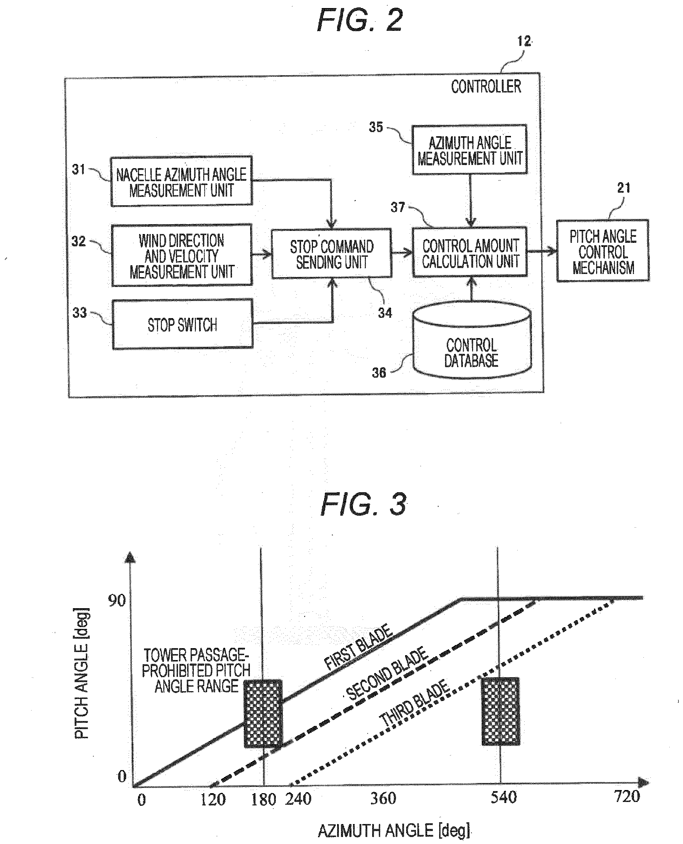

FIG. 2 illustrates an example of the configuration of the controller 12 of the wind power generation apparatus 1 in the first example. The controller 12 illustrated in FIG. 2 calculates a pitch angle control amount in order to avoid collision between the blade and the tower during a stop operation, and transmits a control signal to the pitch angle control mechanism 21. The controller 12 includes a nacelle azimuth angle measurement unit 31, a wind direction and velocity measurement unit 32, a stop switch 33, a stop command sending unit 34, an azimuth angle measurement unit 35, a control database 36, and a control amount calculation unit 37. Note that as long as one of the wind direction and velocity measurement unit 32 or the stop switch 33 is provided, the other and the nacelle azimuth angle measurement unit 31 may not be provided. The nacelle azimuth angle measurement unit 31 measures an azimuth angle in the rotation axis direction of the rotor 10 by using a nacelle azimuth angle meter (not illustrated). The wind direction and velocity measurement unit 32 measures a wind direction and a wind velocity by using the wind vane anemometer 22. As the wind direction and the wind velocity, an instantaneous value may be used, or an average value or a standard deviation obtained by performing statistical processing within a predetermined time, a difference between a maximum value and a minimum value, or the like may be used. The stop switch 33 sends a stop signal when a stop button is pressed. The stop button may be, for example, a physical button, or an electronic button as displayed on a display of a computer. The stop button may be installed directly on the wind power generation apparatus 1 or may be installed in a remote monitoring center or the like. In addition, the stop switch 33 may be incorporated in a monitoring system (not illustrated) of the wind power generation apparatus, and be configured to automatically send a stop signal, for example, when the monitoring system detects an abnormality in the wind power generation apparatus 1.

In the present example, the stop command sending unit 34 is configured to send a stop command when any one of the following conditions is satisfied. Note that the conditions for sending a stop command is not limited to the following.
(1) When a stop signal is received from the stop switch 33
(2) When the absolute value of a yaw error defined by the difference between the azimuth angle measured by the nacelle azimuth angle measurement unit 31 and the wind direction measured by the wind direction and velocity measurement unit 32 exceeds a threshold value
(3) When the wind velocity measured by the wind direction and velocity measurement unit 32 becomes lower than a lower cut-out wind velocity
(4) When the wind velocity measured by the wind direction and velocity measurement unit 32 exceeds an upper cut-out wind velocity
(5) When the absolute value of a rate of change in the wind direction or the wind velocity measured by the wind direction and velocity measurement unit 32 exceeds a predetermined value
(6) When the standard deviation or the difference between the maximum value and the minimum value of the wind direction or the wind velocity measured by the wind direction and velocity measurement unit 32 exceeds a predetermined value

The azimuth angle measurement unit 35 measures an azimuth angle representing a phase around the rotation axis of the rotor 10. Here, as an example, a case where the blade 2 is located directly above the hub 3 in the vertical direction is defined as the azimuth angle of 0 degrees. In addition, it is assumed that the three blades 2 are connected to the hub 3 at equal intervals of 120 degrees. The control database 36 stores control parameters to be used when a stop operation is performed, and stores, for example, a pitch rate representing a rate of change of the pitch angle to the stop, and a tower passage-prohibited pitch angle range according to a wind velocity and a rotation speed. When receiving a stop command from the stop command sending unit 34, the control amount calculation unit 37 calculates a target value of the pitch angle when a stop operation is performed, by using the azimuth angle in the azimuth angle measurement unit 35 and the control parameter in the control database 36. The pitch angle control mechanism 21 controls the pitch angle of each blade 2 so as to become the target value. As the pitch angle control mechanism 21, an electric type is used in the present example so that the pitch angle of each blade can be independently controlled.

Next, a method for calculating the target value of the pitch angle when a stop operation is performed, in the control amount calculation unit 37, will be specifically described with reference to FIG. 3 to 6. FIG. 3 illustrates an example of the relationship between the azimuth angle and the pitch angle of each blade 2 during a normal stop operation.

FIG. 3 illustrates the relationship between the azimuth angle and the pitch angle of each blade when the stop operation is started from a state in which the pitch angle of every blade 2 in operation is 0 degrees (fine) and the azimuth angle of a first blade is 0 degrees. However, for the sake of simplicity, a decrease in the rotation speed due to the stop operation is ignored. In addition, it is assumed that every blade performs a feather operation at a pitch rate defined in the control database 36. That is, the pitch angle of each blade is changed to a feather state at a pitch rate that is constant and not changed. When in a stopped state, the pitch angle is normally set to the feather state (pitch angle of 90 degrees) at the maximum pitch rate in the pitch angle control mechanism 21, and it is set such that a fine state is changed to the feather state by, for example, about one and half rotations of the blade.

The ranges indicated by the checker in FIG. 3 are the tower passage-prohibited pitch angle ranges of the blade. The blade passing through the tower means that in the case of the wind power generation apparatus 1 in which the nacelle 4 is supported on the top of the tower 5 as illustrated in FIG. 1, the blade passes near the position (azimuth angle of 180 degrees) directly below the hub 3 in the vertical direction. In the vicinities of the azimuth angles of 180 degrees and 540 degrees at which the blade passes through the tower, it is designed such that the blade does not fall within a pitch angle range in which the blade bents greatly. As a result, it is avoided that the blade collides with the tower 5.

The tower passage-prohibited pitch angle range is defined by the azimuth angle and the pitch angle of the blade. An azimuth angle range that defines the tower passage-prohibited pitch angle range is determined in consideration of the diameter of the tower 5, and the chord length and thickness of the blade 2. When the diameter of the tower 5 is large, the azimuth angle range of the tower passage-prohibited pitch angle range becomes large. In addition, the larger the chord length or thickness of the blade 2 is, the larger the azimuth angle range of the tower passage-prohibited pitch angle range is. For example, the azimuth angle range that defines the tower passage-prohibited pitch angle range is set to 180 degrees ±30 degrees (azimuth angle of 150 degrees to 210 degrees) or the like. Note that examples of the wind power generation apparatus include a wind power, generation apparatus in which a nacelle is supported by a support structure extending laterally from a main tower and a wind power generation apparatus in which a nacelle is supported by an inclined support structure. These support structures are structures that support the nacelle, similarly to the tower 5 in the present example, and thus they are included, in a broad sense, in the tower in the present invention. In these cases, it is necessary to set an azimuth angle range that defines the tower passage-prohibited pitch angle range based on an azimuth angle at which the support structure is located.

On the other hand, the pitch angle range of the blade that defines the tower passage-prohibited pitch angle range is determined from a deflection of the blade 2 that can avoid collision with the tower 5. The deflection of the blade varies depending on a fluid force acting on the blade and the material or structure of the blade. The fluid force acting on the blade varies depending on a wind velocity, the rotation speed of the blade, or the like. Therefore, the pitch angle of the blade that defines the tower passage-prohibited pitch angle range varies depending on the material or structure of the blade, a wind velocity, the rotation speed of the blade, or the like when a stop operation is performed. The pith angle is determined by performing in advance calculation or the like in consideration of them. For example, the pitch angle range of the blade that defines the tower passage-prohibited pitch angle range is set to 15 degrees to 45 degrees, or the like.

As the tower passage-prohibited pitch angle range, values according to a wind velocity and the rotation speed are stored in the control database 36. The tower passage-prohibited pitch angle range is desirably changed depending on the wind velocity or the rotation speed when a stop operation is performed, but the tower passage-prohibited pitch angle range may be set based on a wind velocity or a rotation speed at which the deflection is maximized.

In the example illustrated in FIG. 3, the tower passage-prohibited pitch angle range indicates that the use of the pitch angle in the range of 15 degrees to 45 degrees is prohibited in the azimuth angle range of 150 degrees to 210 degrees. In the example illustrated in FIG. 3, a normal stop operation (feather control) not based on the present example is performed. In this case, the first blade enters the tower passage-prohibited pitch angle range, so that there is a possibility that the first blade may collide with the tower 5.

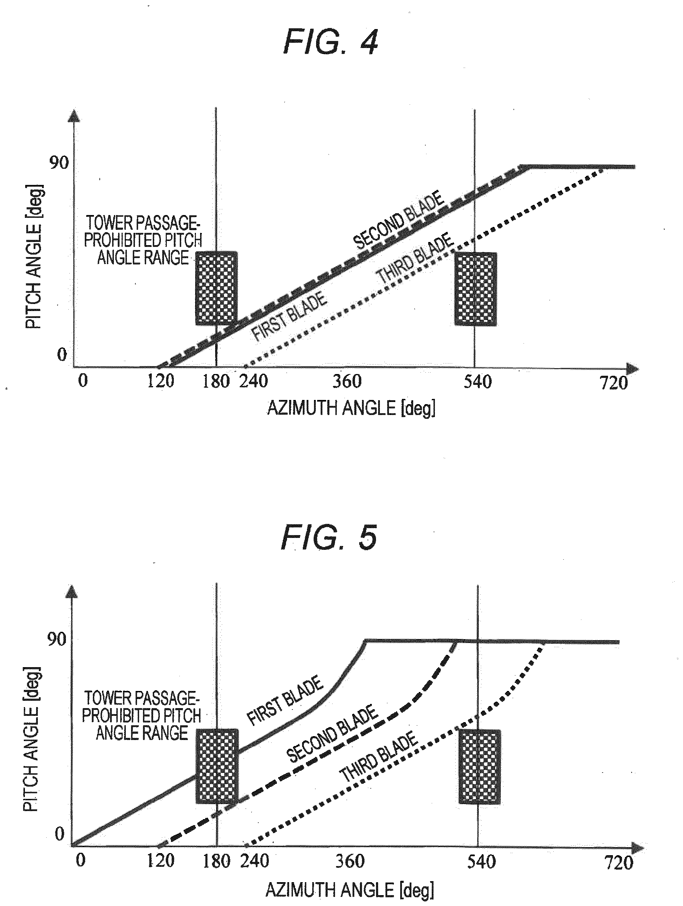

Therefore, the pitch angle is changed in the first example such that each blade does not enter the tower passage-prohibited pitch angle range during a stop operation. Specifically, when a stop operation is performed, the start of the feather operation of each blade is determined based on the azimuth angle of the blade in the present example, not simultaneously starting the feather operation of each blade 2. In other words, all the blades simultaneously start feather operations in the conventional stop methods, but in the present example, the azimuth angle at which the feather operation is started is changed for each blade. As illustrated in FIG. 3, a second blade and a third blade do not enter the tower passage-prohibited pitch angle range. Therefore, when the feather operation is started from the azimuth angle range of 120 degrees to 240 degrees, collision with the tower 5 can be avoided. Therefore, for the first blade expected to collide, it may be designed such that the start of the feather operation is delayed and the feather operation is performed from when the azimuth angle of the first blade becomes 120 degrees, as illustrated in FIG. 4. In the example illustrated in FIG. 4, the feather operations are simultaneously started for the second blade and the third blade when a stop operation is performed, and the start of the feather operation is delayed for the first blade.

In the examples illustrated in FIGS. 3 and 4, the second and third blades do not enter the tower passage-prohibited pitch angle range. But when a stop operation for the wind power generation apparatus is started and when the azimuth angles of the second and third blades are at positions where the blades will enter the tower passage-prohibited pitch angle range, it may be designed such that the starts of the feather operations are similarly delayed and the feather operations are started from when the azimuth angles fall within the range of 120 degrees to 240 degrees (±60 degrees from the azimuth angle at which the tower is located).

Note that the azimuth angle range of 120 degrees to 240 degrees in which the feather operation is started is an example, and it is not limited thereto as long as it is before and after the passing through the tower. In addition, a predetermined azimuth angle may be designated instead of the range, and it may be designed such that the feather operation is started from, for example, when each blade passes through the azimuth angle of 120 degrees.

In the description described above, a decrease in the rotation speed due to the stop operation is ignored in FIGS. 3 and 4, but the present example can be similarly applied even if the rotation speed decreases due to the stop operation. That is, when the rotation speed decreases due to the stop operation, the gradient of the straight line representing the pitch angle, in FIG. 3, increases with an increase in the azimuth angle to just form a curve as illustrated in FIG. 5, so that the same stop method can be applied.

In order to determine whether each blade will enter the tower passage-prohibited pitch angle range, the target value of the pitch angle of each blade may be calculated as illustrated in FIG. 3. However, when a decrease in the rotation speed is taken into consideration, as illustrated in FIG. 5, the relationship between the pitch angle and the azimuth angle may be stored in the control database 36, as illustrated by the curves in FIG. 5, for each wind velocity or rotation speed when an stop operation is performed. In addition, when the rotation speed changes by delaying the start of the feather operation and a deviation occurs from a pitch angle-azimuth angle curve stored in the control database 36, the control amount calculation unit 37 may calculate a change in the rotation speed when the start of the feather operation is delayed, correct the pitch angle-azimuth angle curve, and determine by iterative calculation the azimuth angle at which the feather operation is started.

In the example described above, the pitch angle of every blade, when the stop operation is started, is 0 degrees (fine) , but the pitch angle of the blade, when the stop operation is started, is not necessarily 0 degrees. Depending on the position of the pitch angle of the blade when the stop operation is started, the second blade may enter the tower passage-prohibited pitch angle range without the first blade entering the tower passage-prohibited pitch angle range. Therefore, it is desirable: to confirm in advance the positions of the pitch angle and azimuth angle of the blade when the stop operation is started, and the relationship between the pitch rate and the tower passage-prohibited pitch angle range during the stop operation; and to change the position of the azimuth angle at which the stop operation is started depending on the position of the pitch angle. These pieces of data are stored in the control database 36.

According to the present example, even when a low stiffness blade is adopted, collision between the blade and the tower, possibly occurring during a stop operation for the wind power generation apparatus, can be suppressed. In addition, since it is not necessary to reduce the pitch rate when the wind power generation apparatus is to be stopped, an increase in the time required for the stop can be suppressed.

### Second Example

In a second example, a method for calculating the target value of the pitch angle when a stop operation is performed in the control amount calculation unit 37 of FIG. 2, the method being different from the method described in the first example, will be described. That is, in the first example, it is designed such that the blade will not enter the tower passage-prohibited pitch angle range by changing the azimuth angle when the feather operation is started. But in the present example, it is designed such that the blade will not enter the tower passage-prohibited pitch angle range by changing the pitch rate in the feather operation depending on the azimuth angle.

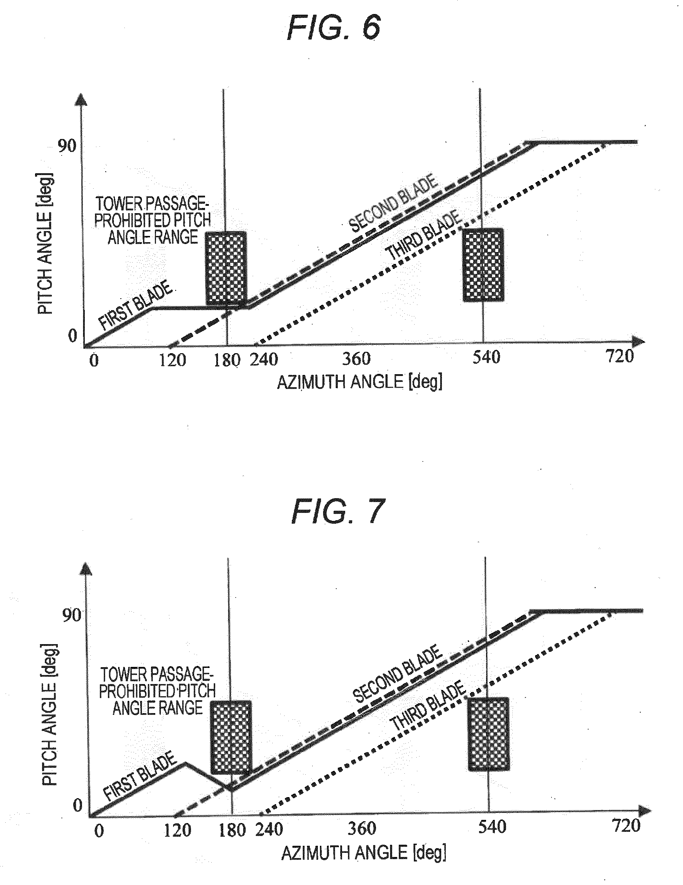

In the present example, when the first blade enters the tower passage-prohibited pitch angle range as illustrated in FIG. 3, the pitch rate is fixed to be less than or equal to the tower passage-prohibited pitch angle range until the blade passes through the tower (azimuth angle range of the tower passage-prohibited pitch angle range) as illustrated in FIG. 6. That is, in the example illustrated in FIG. 6, the feather operation is once started at a predetermined pitch rate in the same way as in the normal stop operation; the pitch angle is fixed (pitch rate: zero) before the pitch angle of the first blade becomes the pitch angle of the tower passage-prohibited pitch angle range; and when the blade passes through the tower, the feather operation is performed again at the predetermined pitch rate. In this example, the feather operation is performed by combining the pitch rate of zero and the predetermined pitch rate.

Alternatively, instead of fixing the pitch angle, it may be designed, as illustrated in FIG. 7, such that: the feather operation is once started in the same way as in the normal stop operation; and when the blade comes to a position of the azimuth angle where it approaches the tower, the pitch angle is returned to a fine side, whereby the blade will not enter the tower passage-prohibited pitch angle range. In this example, the feather operation is performed by combining a pitch rate of a negative value (change of the pitch angle to the fine side) and the predetermined pitch rate.

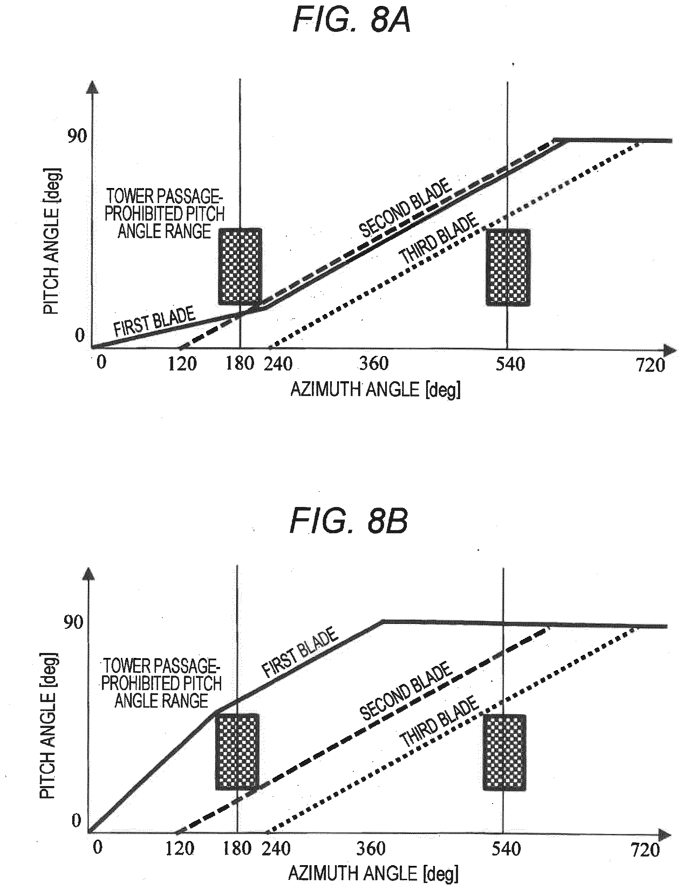

The examples of preventing the blade from entering the tower passage-prohibited pitch angle range by changing the pitch rate in the feather operation can also include controls in which the blade is designed not to enter the tower passage-prohibited pitch angle range by changing the pitch rate, as illustrated in FIGS. 8A and 8B.

In FIG. 8A, the feather operation is performed such that the first blade will not enter the tower passage-prohibited pitch angle range by lowering the pitch rate for the first blade when the stop operation is started. Then, after the first blade avoids the tower passage-prohibited pitch angle range, the feather operation is performed at a normal pitch rate (same pitch rate as the second and third blades). In FIG. 8B, the feather operation is performed such that the first blade will not enter the tower passage-prohibited pitch angle range by raising the pitch rate for the first blade when the stop operation is started. Then, after the first blade avoids the tower passage-prohibited pitch angle range, the feather operation is performed at a normal pitch rate (same pitch rate as the second and third blades). Note that in order to quickly bring the wind power generation apparatus into a stopped state, the pitch rate during the stop operation is normally set to a maximum pitch rate allowed by the pitch angle control mechanism, so that the method illustrated in FIG. 8A is desirable. That is, in the method illustrated in FIG. 8B, it is necessary to keep the pitch rate during the stop operation low, and the time until the wind power generation apparatus is brought into a stopped state becomes long. In the examples illustrated in FIGS. 8A and 8B, the pitch rate is returned to the normal pitch rate after the tower passage-prohibited pitch angle range is avoided, but the present invention is not limited thereto.

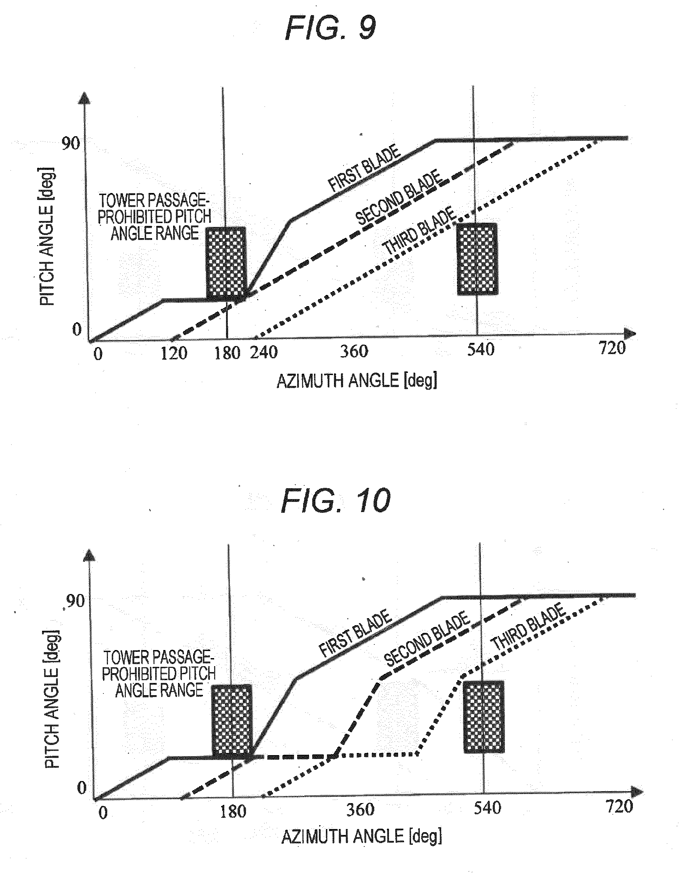

In the methods illustrated in FIGS. 6, 7, 8A, and 8B, the pitch angle of each blade at a certain time is greatly different, so that an imbalance occurs among the load of each blade. As a result, a force or a moment acting on the hub 3 may be larger than that during the normal stop operation. In order to deal with this problem, the pitch rates are changed such that the pitch angle of each blade changes in the same way as much as possible by reducing the time during which the pitch angle of each blade in the feather operation greatly differs. For example, as illustrated in FIG. 9, the pitch angle of the first blade is fixed before the first blade passes through the tower, similarly to the method illustrated in FIG. 6. Then, the pitch rate is raised after the first blade passes through the tower, and the pitch angles of all the blades at the same time are made equal as much as possible.

Alternatively, instead of making the pitch angles of all the blades equal, the pitch angles of the blades other than the first blade may be determined to cancel an imbalance due to an operation for causing the first blade to avoid the tower passage-prohibited pitch angle range. In order to avoid an imbalance among all loads under the condition that is not affected by wind shear or tower shadow, it is necessary to make the pitch angles of all the blades equal. However, when a specific load is only reduced, for example, when a torsional moment on the tower 5 is reduced, it is not necessary to match the pitch angles of all the blades. In addition, there is actually an influence of wind shear or tower shadow, so that it is effective in reducing the imbalance to set the pitch angle of each blade independently.

In the present example, the case where the pitch angle control mechanism 21 can independently control the pitch angle of each blade 2 (independent pitch control) has been described. However, when the blade is designed not to enter the tower passage-prohibited pitch angle range by changing the pitch rate, the independent pitch control is not essential. That is, for example, the feather operation for every blade is once started at a predetermined pitch rate in the same way as in an normal stop operation; the pitch angle of every blade is fixed before the pitch angle of the first blade becomes the pitch angle of the tower passage-prohibited pitch angle range; the pitch rate for every blade is raised when the first blade passes through the tower, and the feather operation is performed at such pitch rate that the pitch angle of the third blade will not enter the tower passage-prohibited pitch angle range; and then the feather operation for every blade is performed again at the normal pitch rate, as illustrated in FIG. 10. When such control is performed, the wind power generation apparatus can also be stopped by preventing all the blades from entering the tower passage-prohibited pitch angle range while the pitch angles of all the blades are made equal without using the independent pitch control.

When a decrease in the rotation speed is taken into consideration, similarly to the first example, also in setting the target value of the pitch angle in the second example illustrated in FIGS. 6 to 10, the relationship between the pitch angle and the azimuth angle may be stored in the control database 36 for each wind velocity or rotation speed when a stop operation is performed. In addition, when the rotation speed changes due to a change in the pitch rate for each blade and a deviation occurs from the pitch angle-azimuth angle curve stored in the control database 36, the control amount calculation unit 37 may calculate the change in the rotation speed when the pitch rate is changed, correct the pitch angle-azimuth angle curve, and determine by iterative calculation the time change of the pitch rate.

In addition, in the second example illustrated in FIGS. 6 to 10, the pitch rate is discontinuously changed, and the target value is set such that the pitch angle-azimuth angle relationship includes a plurality of line segments. However, the pitch rate may be continuously changed, and the pitch angle-azimuth angle relationship in this case is a smooth curve.

In addition, in the second example illustrated in FIGS. 6 to 10, the pitch angle of each blade, when the stop operation is started, is 0 degrees (fine), but the pitch angle of the blade, when the stop operation is started, is not necessarily 0 degrees. Also in the second' example, it is desirable to confirm in advance the positions of the pitch angle and azimuth angle of the blade when the stop operation is started and the relationship between the pitch rate and the tower passage-prohibited pitch angle range during the stop operation, and to change the pitch rate depending on the position of the pitch angle, similarly to the first example. These pieces of data are stored in the control database 36.

According to the present example, even when a low stiffness blade is adopted, collision between the blade and the tower, possibly occurring during a stop operation for the wind power generation apparatus, can be suppressed. In addition, since it is not necessary to reduce the pitch rate when the wind power generation apparatus is to be stopped, an increase in the time required for the stop can be suppressed.

In the first example described above, it is designed such that the blade will not enter the tower passage-prohibited pitch angle range by changing the azimuth angle when the feather operation of the blade is started. In the second example described above, it is designed such that the blade will not enter the tower passage-prohibited pitch angle range by changing the pitch rate in the feather operation. These controls may be performed alone or in combination. In the examples described above, the feather operation is controlled by changing the azimuth angle and/or the pitch rate depending on the azimuth angle, at which the feather operation is started. However, the azimuth angle and/or the pitch rate according to the azimuth angle, at which the feather operation is started, are collectively referred to as a feather control amount.

In the examples described above, the stop operation in the downwind-type wind power generation apparatus has been described. However, also in an upwind-type wind power generation apparatus, the present invention can be applied to suppress a blade from colliding with a tower during a stop operation when the blade bends toward the tower side during the stop operation. For example, in an upwind-type wind power generation apparatus, when the wind power generation apparatus is to be stopped by brining into a feather state in which the front edge of a blade is located on the leeward side with the pitch angle of the blade being changed to the side of minus 90 degrees, a fluid force acting on the blade may act on the tower side. Therefore, a pitch angle at which the fluid force, acting on the blade and toward the tower side during the stop operation for the wind power generation apparatus, increases is confirmed in advance, and the feather control amount is determined to avoid the pitch angle when the blade passes through the tower. As a result, the blade can be prevented from colliding with the tower when passing through the tower.

The present invention is not limited to the above examples, and various modifications are included. For example, the above examples have been described in detail for easy understanding of the present invention, and they are not necessarily limited to those including all the configurations described above. In addition, part of the configuration of a certain example can be replaced with the configuration of another example, or the configuration of a certain example can be added with the configuration of another example. In addition, part of the configuration of each example can be added, deleted, or replaced with other configurations.

In addition, while the recitation of other claims in a claim in a recitation form is a single recitation in order to facilitate understanding of the claim in a recitation form, the present invention includes, in the claim in a recitation form, a form of reciting a plurality of claims (multiple recitation claim) and a form of reciting a plurality of multiple recitation claims.

### Reference Signs List

- 1: wind power generation apparatus
- 2: blade
- 3: hub
- 4: nacelle
- 5: tower
- 6: main shaft
- 7: speed-increasing gear
- 8: generator
- 9: main frame
- 10: rotor
- 11: power converter
- 12: controller
- 21: pitch angle control mechanism
- 22: wind vane anemometer
- 31: nacelle azimuth angle measurement unit
- 32: wind direction and velocity measurement unit
- 33: stop switch
- 34: stop command sending unit
- 35: azimuth angle measurement unit
- 36: control database
- 37: control amount calculation unit

## Claims

1. A wind power generation apparatus comprising:
a rotor including at least one blade;
a nacelle that supports the rotor;
a tower that supports the nacelle;
a pitch angle control mechanism that controls a pitch angle of the blade; and
a controller that outputs a target value of the pitch angle to the pitch angle control mechanism, wherein
when the wind power generation apparatus is to be stopped, the controller determines the target value of the pitch angle during a feather operation of the blade such that the blade does not greatly bend toward the tower in an azimuth angle range in which the blade passes through the tower.

2. The wind power generation apparatus according to claim 1, wherein
the controller includes an azimuth angle measurement unit that measures an azimuth angle of the blade, a stop command sending unit that sends a stop command when the wind power generation apparatus satisfies a predetermined condition, and a control amount calculation unit that determines a feather control amount in the feather operation based on the azimuth angle measured by the azimuth angle measurement unit when the stop command is sent from the stop command sending unit.

3. The wind power generation apparatus according to claim 2, wherein
the controller determines the feather control amount so as to avoid a predetermined pitch angle range in the azimuth angle range in which the blade passes through the tower.

4. The wind power generation apparatus according to claim 3, wherein
the controller determines an azimuth angle at which the feather operation of the blade is started based on an azimuth angle at which the feather operation of the blade is started after the stop command is sent.

5. The wind power generation apparatus according to claim 3, wherein
the controller changes a pitch rate during the feather operation before and after an azimuth angle at which the blade passes through the tower.

6. The wind power generation apparatus according to claim 5, wherein
the controller lowers the pitch rate before the azimuth angle at which the blade passes through the tower, and raises the pitch rate after the azimuth angle at which the blade passes through the tower.

7. The wind power generation apparatus according to claim 3, wherein
the controller fixes the pitch angle to a constant value in the azimuth angle range in which the blade passes through the tower.

8. The wind power generation apparatus according to claim 3 that is a downwind type, wherein
the rotor is located on a leeward side with respect to the tower.

9. The wind power generation apparatus according to claim 3, wherein
the rotor includes a plurality of the blades, and the pitch angle control mechanism has an independent pitch control function capable of individually controlling pitch angles of the plurality of the blades.

10. A method for stopping a wind power generation apparatus including a rotor including at least one blade, a nacelle that supports the rotor, a tower that supports the nacelle, and a pitch angle control mechanism that controls a pitch angle of the blade, wherein
when the wind power generation apparatus is to be stopped, the pitch angle control mechanism changes a pitch rate of a feather operation before and after an azimuth angle at which the blade passes through the tower.

11. A method for stopping a wind power generation apparatus including a rotor including a plurality of blades, a nacelle that supports the rotor, a tower that supports the nacelle, and a pitch angle control mechanism that individually controls pitch angles of the plurality of blades, wherein
when the wind power generation apparatus is to be stopped, a timing at which a feather operation of at least one of the plurality of blades is started is made different from a timing at which a feather operation of another blade is started.
